# EUROPEAN PATENT APPLICATION

(11) **EP 4 434 356 A1**
(43) Date of publication of application: **25.09.2024**
(21) Application number: 22901755.3
(22) Date of filing: 30.11.2022
(51) Int. Cl.: A23L 29/30, A23L 27/10, A23L 3/16

(54) **NATURAL SUGAR-FREE SYRUP, AND PRODUCTION METHOD THEREOF**

(30) Priority: 30.11.2021 KR 20210168974
(71) Applicant: CJ CheilJedang Corporation, Seoul 04560 (KR)
(72) Inventor: JUNG, Jiwoo, Seoul 04560 (KR); KONG, Moon Hee, Seoul 04560 (KR); KIM, Sunny, Seoul 04560 (KR); LEE, Minhyun, Seoul 04560 (KR); KIM, Chul Jin, Seoul 04560 (KR)
(74) Representative: Regimbeau
(86) International application number: PCT/KR2022/019172
(87) International publication number: WO 2023/101397

(57) **Abstract**

The present disclosure relates to a sucrose-free natural syrup, a food composition comprising the syrup, a method for preparing the syrup, and a method for improving the flavor persistence of natural flavors.

## Description

### [Technical Field]

The present disclosure relates to a sucrose-free natural(naturally derived additives-based) syrup, a food composition including the syrup, a method for preparing the syrup, and a method for improving the flavor persistence of natural flavors.

### [Background Art]

Syrup is typically prepared by adding fruit concentrates and flavors to develop taste and flavors, depending on the type, and adding acidity regulators such as citric acid to control acidity and colorings to impart colors, based on a sugar solution such as sucrose. The flavors used herein are generally divided into synthetic flavors made by a combination of compounds and natural(naturally derived) flavors composed of extracts extracted from natural raw materials with hot water and alcohol.

Meanwhile, syrup provides excellent sweetness based on sucrose as the main ingredient, but sucrose is high in calories, providing 4 kcal per gram. In this regard, many low-calorie and sucrose-zero sweeteners have been utilized to replace sucrose , but these have a sweetness profile and mouthfeel different from sucrose, have different persistence of sweetness, aftertaste, bitterness and astringency from sucrose, and contain a high content of synthetic additives.

Accordingly, there is a high demand for syrups containing low-calorie or sucrose -sucrose-zero natural(naturally derived) sweeteners that provide sweetness, mouth feel, and persistence of sweetness similar to syrups containing sucrose.

However, when the sweetness is produced by sugar alcohols and natural high-intensity sweeteners without adding saccharides such as sucrose, the properties become more diluted than syrup containing saccharides such as sucrose, as the solid content is reduced than that of existing sucrose, thus, if the syrup is pumped using a pump, it will splatter, which may decrease the stability of physical properties.

Additionally, the natural flavors are widely used because they have the advantage of realizing natural, non-artificial tastes and flavors compared to synthetic flavors. However, they are more vulnerable to heat than synthetic flavors, thus, when exposed to high temperatures or for a long period of time to ensure microbial safety, the intensity of flavors is reduced as the flavors volatilize, which is a disadvantage.

Further, in the case of syrups composed of natural(naturally derived) additives (natural high-intensity sweeteners, natural flavors, natural colors, *etc.),* preservatives are added to ensure quality stability and microbial safety, most of which are potassium sorbate and synthetic preservatives, thus, they are unsuitable for the needs of consumers who prefer natural additives/raw materials.

### [Prior Art Document]

### [Patent Document]

(Patent Document 1) KR 10-2016-0007709 A

### [Disclosure]

### [Technical Problem]

The present inventors have developed a sucrose-free natural syrup that maintains the taste quality, physical stability, and microbial safety of conventional syrup products, while significantly reducing calories, has excellent flavor development and persistence, and has good preference for sweetness, aftertaste, *etc*.; a food composition including the syrup; a method for preparing the syrup; and a method for improving the flavor persistence of natural flavors, thereby completing the present disclosure.

### [Technical Solution]

It is one object of the present disclosure to provide a sucrose-free natural syrup, including sugar alcohols, natural high-intensity sweeteners, natural stabilizers, natural antibacterial agents and natural flavors.

It is another object of the present disclosure to provide a food composition including the l sucrose-free natural syrup.

It is still another object of the present disclosure to provide a method for preparing the sucrose-free natural syrup.

It is yet another object of the present disclosure to provide a method for improving the flavor persistence of natural flavors.

### [Advantageous Effects]

The syrup of the present disclosure comprises sugar alcohols, natural high-intensity sweeteners, natural stabilizers, natural antibacterial agents and natural flavors, instead of sucrose, thereby providing a sucrose-free natural syrup which maintains the taste quality, physical stability, and microbial safety of conventional syrup products, while significantly reducing calories, has excellent flavor development and persistence, and has good preference for sweetness, aftertaste, *etc.*

### [Brief Description of Drawings]

FIG. 1 is a diagram showing the results of microbial safety assessment of 11 types of natural antibacterial agents.
FIG. 2 is a schematic diagram of the preparation process of the sucrose-free natural syrup of the present disclosure.

### [Detailed Description of Preferred Embodiments]

The present disclosure will be described in detail as follows. Meanwhile, each description and embodiment disclosed herein can be applied to other descriptions and embodiments, respectively. That is, all combinations of various elements disclosed herein fall within the scope of the present disclosure. Further, the scope of the present disclosure is not limited by the specific description described below. A number of papers and patent documents have been cited throughout the present specification. The content of the cited papers and patent documents is incorporated herein by reference in their entirety and the level of technical field to which the present disclosure belongs and the contents of the present disclosure will be described more clearly.

One aspect of the present disclosure provides a sucrose-free natural(naturally derived additives-based) syrup, including sugar alcohols, natural(naturally derived) high-intensity sweeteners, natural(naturally derived) stabilizers, natural(naturally derived) antibacterial agents and natural(naturally derived) flavors.

The syrup of the present disclosure comprises sugar alcohols, natural high-intensity sweeteners, natural stabilizers, natural antibacterial agents and natural flavors, instead of sucrose, thereby providing a sucrose-free natural syrup which maintains the taste quality, physical stability, and microbial safety of conventional syrup products, while significantly reducing calories, has excellent flavor development and persistence, and has good preference for sweetness, aftertaste, *etc.*

Specifically, the sugar alcohol may be contained in an amount of 10 to 30 parts by weight based on 100 parts by weight of the total syrup.

When the sugar alcohol is contained within the above range, it can exhibit a body and persistence of sweetness similar to sucrose. When the content thereof exceeds the above range, for example, if it is added in an amount exceeding 30 parts by weight, there is a problem that crystals may precipitate when stored in a supersaturated state in the solution.

Additionally, the sugar alcohol may be one or more selected from the group consisting of erythritol, tagatose, xylose, arabinose, ribose, xylitol, lactitol, maltitol, and sorbitol, and may specifically be erythritol, but is not limited thereto.

The erythritol is a sugar alcohol known to have a sweetness profile most similar to white sucrose, and is a substance with very minimal calories of 0 to 0.2 kcal/g.

Specifically, the natural high-intensity sweetener may be contained in an amount of 0.35 to 0.55 parts by weight based on 100 parts by weight of the total syrup, but is not limited thereto.

When the natural high-intensity sweetener is contained within the above range, it can exhibit the sweetness intensity and persistence of sweetness most similar to sucrose. When the content thereof exceeds the above range, there is a problem that an off-taste/off-flavor is produced and a bitter aftertaste may be perceived as a sweet taste different from sucrose, and thus is unsuitable from the sensory aspects.

Additionally, the natural high-intensity sweetener may be one or more selected from the group consisting of steviol glycosides, sucralose, aspartame, monk fruit extracts, licorice extracts, and thaumatin, but is not limited thereto.

More specifically, the steviol glycoside may be stevioside, rebaudioside A, rebaudioside B, rebaudioside C, rebaudioside D, rebaudioside E, rubusoside, dulcoside A, stevioside, or a mixture thereof, but is not limited thereto, and more specifically, it may be rebaudioside A.

As used herein, the term "rebaudioside A" may be used interchangeably with "REBATEN^{™}", and the rebaudioside A exhibits sweetness and persistence of sweetness most similar to sucrose, and when mixed with erythritol, it does not leave a bitter aftertaste and improves persistence of sweetness. Specifically, the sugar alcohol and the natural high-intensity sweetener may be contained in a mixing ratio of 10:1 to 100:1, specifically 15:1 to 90:1, and more specifically 18:1 to 86:1, but is not limited thereto.

When the sugar alcohol and the natural high-intensity sweetener are contained in the above mixing ratio, the sweetness intensity and persistence of sweetness most similar to sucrose may be exhibited. When the ratio thereof exceeds the above range, there is a problem that an off-taste/off-flavor is produced and a bitter aftertaste may be perceived as a sweet taste different from sucrose, and thus is unsuitable from the sensory aspects.

The natural high-intensity sweetener, specifically rebaudioside A, is known to have its own bitter taste. Accordingly, the bitter taste of the natural high-intensity sweetener may be reduced and the persistence of sweetness may be increased by mixing with the sugar alcohol, specifically erythritol, thereby increasing preference. Thus, there may be provided a sucrose-free natural syrup that can maintain the taste quality, mouthfeel, and physical stability of conventional syrup products, while significantly reducing calories.

Specifically, the natural stabilizer may comprise pectin and xanthan gum, and the natural stabilizer may be contained in an amount of 0.3 to 0.5 parts by weight based on 100 parts by weight of the total syrup, but is not limited thereto.

When the natural stabilizer is contained within the above range, the physical properties similar to those of dissolved sucrose may be exhibited. In the case of syrup, a pump is used in most cases, and when the stabilizer is used in an amount lower than the above range, the properties may become diluted, causing splatter when using the pump. Additionally, when the stabilizer is used in an amount higher than the above range, there may be a problem that the properties may thicken and it may be difficult to use the pump, thereby reducing flowability.

More specifically, the pectin and xanthan gum may be contained in a mixing ratio of 4:1 to 2:1, for example, 3:1, but the ratio is not limited thereto.

When the sweetness is produced by sugar alcohols and natural high-intensity sweeteners without adding saccharides such as sucrose, the properties become more diluted than syrup containing saccharides such as sucrose, as the solid content is reduced than that of existing sucrose, thus, if the syrup is pumped using a pump, it will splatter, which may decrease the stability of physical properties.

In this regard, in one embodiment of the present disclosure, it was confirmed that sufficient viscosity was not realized when pectin or xanthan gum was used alone as the natural stabilizer. In addition, it was confirmed that when other combinations (xanthan gum, locust bean gum) were used, an off-taste/off-flavor was produced and sufficient viscosity was not realized. Further, it was confirmed that when the pectin and xanthan gum were contained in the above mixing ratio, the viscosity (CP) of the syrup was maintained at 85 to 90 CP, thereby maintaining the physical stability of the conventional syrup products.

Meanwhile, in the case of syrups composed of natural additives (natural high-intensity sweeteners, natural flavors, natural colors, *etc.*), preservatives are added to ensure quality stability and microbial safety, most of which are potassium sorbate and synthetic preservatives, thus, they are unsuitable for the needs of consumers who prefer natural additives/raw materials.

By using the natural antibacterial agent of the present disclosure, product that meets consumer demand by utilizing the syrup composed only of natural raw materials.

Specifically, the natural antibacterial agent may be one or more selected from the group consisting of citrus extract, EluoS complex extract, and green tea extract, specifically, citrus extract.

The citrus extract contains a limonene (d-limonene) compound, which can provide an antibacterial effect along with a refreshing scent, thus improving consumer preference for the product. Additionally, it may provide an effect of physiological functional activity due to the remaining polyphenol compounds, essential oil components, ester components, carotenoids, flavonoids, and various vitamins, *etc.* contained in the citrus extract. In addition, the citrus extract has a strong residual activity due to essential oil components, *etc.,* which can further increase antibacterial persistence. The citrus extract may be used by mixing with 45% glycerin, but is not limited thereto.

The EluoS complex extract refers to an extract containing catechin (tea), citric acid, vitamin B1 lauryl sulfate, calcium, and purified water.

The green tea extract may comprise all known or commercially available green tea extracts, and may be prepared to be used, but it is not necessary to specifically limit the method of preparing the extract, since it is not significantly affected by the preparation method.

The natural antibacterial agent may be contained in an amount of 0.01 to 0.04 parts by weight based on 100 parts by weight of the total syrup, but is not limited thereto.

When the natural antibacterial agent is contained in an amount less than 0.01 parts by weight, the antibacterial activity may not be realized, and when it is contained in an amount exceeding 0.04 parts by weight, there is a problem in that an off-taste/off-flavor is produced in terms of sensory aspects.

Within the above range, the natural antibacterial agent may be more effective in reducing volatile scents formed when mixed with natural flavors and creating a refreshing scent, and at the same time, antibacterial activity may further be improved.

Meanwhile, flavors, which are composed of substances that transmit fragrance, are largely divided into natural flavors and synthetic flavors. The natural flavors are obtained through various methods from animals, plants, microorganisms, *etc.,* and synthetic flavors are obtained through organic synthesis. Among the natural flavors, animal-based flavors mainly include ambergris obtained from whales, civet obtained from civet cats, muscone obtained from musk deer, and castoreum obtained from beavers. Additionally, plant-based flavors are obtained from plants with various scents, and well-known plant-based flavors include bergamot, sage, eucalyptus, jasmine, juniper, lavender, orange, patchouli, peppermint, rose, sandalwood, vanilla, ylang-ylang, hyssop, chamomile, thyme, red grapefruit, lemon, citrus, *etc.* (C. K. Dodt. 1996. The Essential Oils Book. Storey Books.).

Specifically, in the syrup of the present disclosure, the citrus-based natural flavors, such as orange, lemon, lime, *etc.,* may be used, but are not limited thereto.

Another aspect of the present disclosure provides a food composition including the sucrose-free natural syrup.

The sucrose-free natural syrup is as described above.

When the syrup of the present disclosure is used in a food composition, the syrup may be added as it is or may be used together with other food compositions or ingredients, and may be used appropriately according to a conventional method. The amount of the active ingredient to be mixed may be suitably determined in consideration of the taste and flavor of the food, the purpose of use, health, *etc.* Examples of the food composition may comprise, but are not limited to, various sauces, ketchup, dressings, beverages, tea, drinks, alcoholic beverages, vitamin complexes, soups, dairy products, candies, chocolates, *etc.,* and any composition that can produce food, including syrup, may be used without limitation.

Still another aspect of the present disclosure provides a method for preparing the sucrose-free natural syrup.

The sucrose-free natural syrup is as described above.

Specifically, the present disclosure provides a method for preparing the sucrose-free natural syrup, including:
preparing a raw material composition by dissolving sugar alcohols, natural high-intensity sweeteners, natural stabilizers, and natural antibacterial agents in water, followed by stirring;
pre-pasteurizing the raw material composition at a temperature range of 70°C to 80°C for 10 to 15 minutes;
cooling the pre-pasteurized raw material composition to a temperature of 25°C to 50°C;
preparing a syrup composition by mixing natural flavors to the cooled syrup composition; and
pasteurizing the syrup composition using high-temperature short-time (HTST) pasteurization at a temperature range of 96°C to 99°C for 30 to 40 seconds.

Hereinafter, the method for preparing the sucrose-free natural syrup will be described in detail.

First, a raw material composition is prepared by dissolving sugar alcohols, natural high-intensity sweeteners, natural stabilizers, and natural antibacterial agents in water, followed by stirring.

Specifically, the sugar alcohols may be contained in an amount of 10 to 30 parts by weight based on 100 parts by weight of the total syrup,
the natural high-intensity sweeteners may be contained in an amount of 0.35 to 0.55 parts by weight based on 100 parts by weight of the total syrup,
the sugar alcohols and natural high-intensity sweeteners may be contained in a mixing ratio of 85 : 1 to 150 : 1,
the natural stabilizers may comprise pectin and xanthan gum,
the natural stabilizers may be contained in an amount of 0.3 to 0.5 parts by weight based on 100 parts by weight of the total syrup,
the pectin and xanthan gum may be contained in a mixing ratio of 4:1 to 2:1, for example, in a mixing ratio of 3:1, and
the natural antibacterial agent may be one or more selected from the group consisting of citrus extract, EluoS complex extract, and green tea extract, specifically, citrus extract, but is not limited thereto.

Specifically, the water may be purified water, but is not limited thereto, and the dissolving step may be a step of dissolving sugar alcohols in purified water at a temperature of 60°C or higher, specifically in the range of 60°C to 70°C, and then dissolving natural high-intensity sweeteners, natural stabilizers and natural antibacterial agents, but is not limited thereto.

When the dissolving step is performed at a temperature below 60°C, the solubility of sugar alcohols may be low, and when performed at a temperature above 70°C, steam is generated, and it may be difficult to create a suitable working environment at the production field.

It may be efficient to dissolve the sugar alcohols in purified water first because they are contained at a higher content in the total amount of syrup and their solubility is lower than that of other raw materials.

Subsequently, the raw material composition is subjected to pre-pasteurization at a temperature range of 70°C to 80°C for 10 to 15 minutes.

When the pre-pasteurization step is performed at a temperature below 70°C, pasteurization may not be achieved, and when it is performed at a temperature above 80°C, it may take a long time until the cooling step, which reduces efficiency in the preparation process.

In one example of the present disclosure, it was confirmed that the microbial growth may be initially controlled by including the pre-pasteurization step compared to a preparation method that does not comprise a pre-pasteurization step.

Next, the pre-pasteurized raw material composition is cooled to a temperature of 25°C to 50°C.

Subsequently, a syrup composition is prepared by mixing natural flavors to the cooled syrup composition.

In the case of natural flavors, they are widely used because they have the advantage of realizing natural, non-artificial tastes and flavors compared to synthetic flavors. However, they are more vulnerable to heat than synthetic flavors, thus, when exposed to high temperatures or for a long period of time to ensure microbial safety, the intensity of flavors is reduced as the flavors volatilize, which is a disadvantage. In this regard, in the case of the existing syrup preparation method, natural flavors were added to the mixture maintained at a temperature of 60°C or higher after dissolving sucrose, and there was a problem that the volatilization of the natural flavors increased, and the flavor persistence and preference after the pasteurization process rapidly decreased.

In the case of the method for preparing the syrup of the present disclosure, the pasteurized raw material composition is cooled to a temperature of 50°C or lower, and then the natural flavors are mixed to the cooled syrup composition, thus, the flavor persistence and preference may be maintained at a similar level as before the pasteurization process even after the pasteurization process.

Therefore, the method for preparing the syrup of the present disclosure can reduce the initial occurrence of microorganisms and the volatilization of natural flavors of the sucrose-free natural syrup.

Subsequently, the syrup composition is pasteurized using high-temperature short-time (HTST) pasteurization at a temperature range of 96°C to 99°C for 30 to 40 seconds.

In one embodiment of the present disclosure, it was confirmed that when the high-temperature short-time (HTST) pasteurization was performed at a temperature range of 96°C to 99°C for 30 to 40 seconds, pasteurization of bacteria was the most effective when general bacteria/fungi were artificially introduced and pasteurized, and that there was almost no change in flavors/tastes.

Yet another aspect of the present disclosure provides the sucrose-free natural syrup prepared by the above method.

The method and the sucrose-free natural syrup are as described above.

Specifically, the syrup prepared by the above method may have reduced volatilization of natural flavors, but is not limited thereto.

Even another aspect of the present disclosure provides a method for improving the flavor persistence of natural flavors.

Specifically, the present disclosure provides a method for improving the flavor persistence of natural flavors, including:
preparing a raw material composition by dissolving sugar alcohols, natural high-intensity sweeteners, natural stabilizers, and natural antibacterial agents in water, followed by stirring;
pre-pasteurizing the raw material composition at a temperature range of 70°C to 80°C for 10 to 15 minutes;
cooling the pre-pasteurized raw material composition to a temperature of 25°C to 50°C;
preparing a syrup composition by mixing natural flavors with the cooled syrup composition; and
pasteurizing the syrup composition using high-temperature short-time (HTST) pasteurization at a temperature range of 96°C to 99°C for 30 to 40 seconds.

The step of preparing the raw material composition, the pre-pasteurization step, the cooling step, the step of preparing the syrup composition, and the natural flavors are as described above.

Specifically, the method is characterized in that it may reduce the volatilization of natural flavors, but is not limited thereto.

### [Mode for Carrying Out the Invention]

Hereinafter, the present disclosure will be described in detail by way of Examples. However, these Examples are merely preferred Examples given for illustrative purposes, and thus, the scope of the present disclosure is not intended to be limited to or by these Examples. Meanwhile, technical features which are not described herein can be sufficiently understood and easily carried out by those skilled in the art in the technical field of the present disclosure or in a similar technical field.

### Example 1: Preparation of Sucrose-free Natural(naturally derived additives-based) Syrups

Sucrose syrup, vanilla syrup, and red grapefruit syrup of Comparative Example and Examples 1 to 3 were prepared with the compositions shown in Tables 1 to 3 below, respectively.

Specifically, the syrups were prepared by first dissolving saccharides or sugar alcohols in purified water at high temperature (80°C or higher) and then adding the remaining ingredients. Four types of syrup were prepared by mixing the raw materials, and the remaining weight was filled with water to obtain 100 parts by weight.

**[Table 1]**

| Sucrose syrup | | | | |
|---|---|---|---|---|
| **Raw Materials** | **Compar ative Example** | **Example 1** | **Example 2** | **Example 3** |
| Sucrose | 62.000 | - | - | - |
| Erythritol | - | 10.00 | 15.00 | 30.00 |
| REBATEN^{™} 97% (Rebaudioside A 97%) | - | 0.270 | 0.220 | 0.200 |
| REBATEN^{™} G180 | - | | 0.240 | 0.150 |
| REBATEN^{™} premium | - | 0.280 | | |
| Citric acid | 0.005 | 0.005 | 0.005 | 0.005 |
| Maltodextrin | - | 1.000 | 1.000 | 1.000 |
| Salt | - | 0.166 | 0.166 | 0.166 |
| Purified water | 37.9950 | 88.2790 | 83.3690 | 68.4790 |

**[Table 2]**

| Vanilla syrup | | | | |
|---|---|---|---|---|
| **Raw Materials** | **Comparati ve Example** | **Example 1** | **Example 2** | **Example 3** |
| Sucrose | 62.00 | | | |
| Erythritol | | 10.00 | 15.00 | 30.00 |
| Vanilla flavor | 1.5000 | 1.5000 | 1.5000 | 1.5000 |
| REBATEN^{™} 97% (Rebaudioside A 97%) | | 0.270 | 0.220 | 0.200 |
| REBATEN^{™} G180 | | | 0.240 | 0.150 |
| REBATEN^{™} premium | | 0.280 | | |
| Citric acid | | 0.005 | 0.005 | 0.005 |
| Maltodextrin | | 1.000 | 1.000 | 1.000 |
| Salt | | 0.166 | 0.166 | 0.166 |
| Purified water | | 86.7790 | 81.8690 | 66.9790 |

**[Table 3]**

| Red grapefruit syrup | | | | |
|---|---|---|---|---|
| **Raw Materials** | **Comparative Example** | **Example 1** | **Example 2** | **Example 3** |
| Sucrose | 62.00 | | | |
| Erythritol | | 10.00 | 15.00 | 30.00 |
| Red grapefruit concentrate | 2.56 | 2.56 | 2.56 | 2.56 |
| Red grapefruit flavor | 0.8500 | 0.8500 | 0.8500 | 0.8500 |
| REBATEN^{™} 97% (Rebaudioside A 97%) | | 0.270 | 0.220 | 0.200 |
| REBATEN^{™} G180 | | | 0.240 | 0.150 |
| REBATEN^{™} premium | | 0.280 | | |
| Citric acid | 0.996 | 0.996 | 0.996 | 0.996 |
| Maltodextrin | | 1.000 | 1.000 | 1.000 |
| Salt | | 0.166 | 0.166 | 0.166 |
| Purified water | | 83.8780 | 78.9680 | 64.0780 |

### Experimental Example 1: Evaluation of Sweetness and Off-Taste/Off-Flavor via Sensory Testing

The syrups prepared in Example 1 was diluted 10 times with purified water to prepare samples, and a sensory testing was conducted for sweetness, mouthfeel, and flavor persistence by trained panels of 15 to 18 adult professional researchers (age of 20 to 40).

Samples were provided simultaneously in a transparent plastic cup (50 ml), and purified water was provided to rinse the mouth between evaluations. The sensory testing was conducted by blind label test (BLT), and each sample was evaluated on a 9-point scale (9 points very good, 5 average, 1 very poor) and the results converted to a 5-point scale are shown in Tables 4 to 6 below.

**[Table 4]**

| **Sucrose syrup (p-value = 0.11)** | **Compar ative Exampl e** | **Example 1** | **Example 2** | **Example 3** |
|---|---|---|---|---|
| Sweetness intensity | 3.60 | 3.63 | 3.67 | 3.67 |
| Sweetness preference | 3.20 | 3.23 | 3.40 | 3.47 |
| Sweetness persistence | 3.40 | 3.37 | 3.40 | 3.57 |
| Bitterness intensity | 2.13 | 2.23 | 2.07 | 2.10 |
| Body intensity | 3.07 | 3.07 | 2.93 | 3.17 |
| Intensity of off-taste/off-flavor | 1.50 | 1.60 | 1.80 | 1.43 |
| Overall preference | 3.90 | 3.87 | 3.90 | 4.07 |

**[Table 5]**

| **Vanilla syrup (p-value = 0.077)** | **Compar ative Example** | **Example 1** | **Example 2** | **Example 3** |
|---|---|---|---|---|
| Overall preference | 3.56 | 3.50 | 3.61 | 3.67 |
| Body | 3.72 | 3.78 | 3.81 | 4.06 |
| Sweetness intensity | 4.00 | 3.97 | 3.94 | 4.28 |
| Sweetness preference | 3.78 | 3.17 | 3.47 | 3.78 |
| Vanilla flavor intensity | 3.72 | 3.67 | 3.78 | 3.78 |
| Vanilla flavor | 4.11 | 4.03 | 4.14 | 4.25 |
| intensity preference | | | | |
| Vanilla flavor persistence | 4.03 | 3.78 | 3.94 | 4.03 |
| Off-taste/off-flavor | 1.58 | 1.61 | 1.67 | 1.61 |

**[Table 6]**

| **Red grapefruit syrup (p-value = 0.87)** | **Compara tive Example** | **Exampl e 1** | **Example 2** | **Exampl e 3** |
|---|---|---|---|---|
| Sweetness intensity | 3.70 | 3.63 | 3.75 | 3.73 |
| Sweetness preference | 3.93 | 3.83 | 3.88 | 4.00 |
| Red grapefruit flavor intensity | 3.60 | 3.60 | 3.67 | 3.60 |
| Red grapefruit flavor intensity preference | 3.50 | 3.53 | 3.52 | 3.60 |
| Red grapefruit flavor persistence | 3.60 | 3.50 | 3.47 | 3.60 |
| Body intensity | 3.63 | 3.40 | 3.40 | 3.60 |
| Intensity of off-taste/off-flavor | 1.33 | 1.40 | 1.40 | 1.33 |
| Sourness intensity | 2.10 | 2.03 | 2.13 | 2.10 |
| Overall preference | 3.97 | 3.87 | 3.83 | 4.03 |

As a result, as can be seen in Tables 4 to 6, there was no significant difference in the sweetness, mouthfeel, and flavor persistence between the Examples and the Comparative Example, and these values showed no statistically significant difference (*p-value* > 0.05). Accordingly, the contents of the optimal sugar alcohol (erythritol) and natural high sweetener (REBATEN^{™}) were selected as shown in Example 3, which showed the best overall preference, sweetness intensity, and sweetness preference.

### Experimental Example 2: Evaluation of Physical Properties via Viscosity Measurement

It was attempted to screen the composition and content of natural stabilizers that can maintain physical stability in the syrups containing the optimal sugar alcohol (erythritol) and natural high sweetener (REBATEN^{™}) in the contents shown in Example 3 selected in Example 1 above.

Specifically, viscosity was measured using a Brookfield viscometer. The Brookfield viscometer is a rotational viscometer that measures the resistance of a fluid applied to a spindle. The measurement principle is to place a measurement sample in a specific container and measure the friction generated as the spindle is immersed in the fluid, thereby measuring viscosity (cp). The viscosity was measured by taking 200 g of the sample and adding it to a 250 ml glass beaker, and the measurement was carried out using VDV-2 as the Brookfield viscometer with spindle no. 1, at 100 rpm for 60 seconds, and the results are shown in Table 7.

**[Table 7]**

| **Raw materials** | **Sucrose syrup** | | | | | |
|---|---|---|---|---|---|---|
| | **Comparativ e Example** | **Example 3** | **Comparati ve Example 2** | **Comparati ve Example 3** | **Comparati ve Example 4** | |
| Sucrose | 62.000 | | | | | |
| Erythritol | | 30.000 | 30.00 | 30.00 | 30.00 | |
| Red grapefruit concentrate | | | | | | |
| Vanilla flavor | | | | | | |
| Red grapefruit flavor | | | | | | |
| REBATEN^{™} 97% | | 0.200 | 0.200 | 0.200 | 0.200 | |
| REBATEN^{™} G180 | | 0.150 | 0.150 | 0.150 | 0.150 | |
| Citric acid | | 0.005 | 0.005 | 0.005 | 0.005 | 0.005 |
| Pectin AMD 383S2 | | | 0.300 | 0.1 | | |
| Xanthan gum, CX910 | | | 0.100 | | 0.1 | 0.1 |
| Locust bean gum | | | | | | 0.3 |
| Maltodextrin | | 1.000 | 1.000 | 1.000 | 1.000 | 1.000 |
| Salt | | 0.166 | 0.166 | 0.166 | 0.166 | 0.166 |
| Purified water | | 36.829 | 68.079 | 68.379 | 68.379 | 68.079 |
| Viscosit y | CP | 92.70 | 93.10 | 32.30 | 85.30 | 89.50 |
| | % (torque) | 89.40 | 89.90 | 79.40 | 81.40 | 83.40 |
| Generation of off-taste/off-flavor | | - | X | X | X | O |
| Sensory applicability | | - | O | O | O | X |

As a result, as shown in Table 7, it was confirmed that sufficient viscosity was not realized when pectin or xanthan gum was used alone as the natural stabilizer. Additionally, it was confirmed that when other combinations (xanthan gum, locust bean gum) were used, off-taste/off-flavor was generated and sufficient viscosity was not realized.

Further, when 0.3% pectin and 0.1% xanthan gum were mixed and applied, a viscosity (cp) value similar to that of Comparative Example was obtained, and cp (%, torque), which indicates reliability, was confirmed to be at a similar level of 80% or higher.

Accordingly, pectin and xanthan gum were determined as the composition of the natural stabilizer, and the mixing ratio was determined at 3:1, which was then applied to vanilla syrup and red grapefruit syrup to confirm physical stability.

**[Table 8]**

| **Raw materials** | | **Sucrose syrup** | | **Vanilla syrup** | | **Red grapefruit syrup** | |
|---|---|---|---|---|---|---|---|
| | | **Compar ative Example** | **Example 3** | **Compar ative Example** | **Example 3** | **Compar ative Example** | **Example 3** |
| Sucrose | | 62.000 | 62.000 | 62.000 | | 62.000 | |
| Erythritol | | | 30.000 | | 30.000 | | 30.000 |
| Red grapefruit concentrate | | | | | | 2.560 | 2.560 |
| Vanilla flavor | | | | 1.500 | 1.500 | | |
| Red grapefruit flavor | | | | | | 0.850 | 0.850 |
| REBATEN^{™} 97% | | | 0.200 | | 0.200 | | 0.200 |
| REBATEN^{™} G180 | | | 0.150 | | 0.150 | | 0.150 |
| Citric acid | | 0.005 | 0.005 | | 0.005 | 0.995 | 0.995 |
| Pectin AMD 383S2 | | | 0.300 | | 0.300 | | 0.300 |
| Xanthan gum, CX910 | | | 0.100 | | 0.100 | | 0.100 |
| Locust bean gum | | 1.000 | 1.000 | 1.000 | 1.000 | 1.000 | 1.000 |
| Maltodextrin | | 0.166 | 0.166 | 0.166 | 0.166 | 0.166 | 0.166 |
| Salt | | 36.829 | 6.079 | 35.334 | 66.579 | 32.429 | 63.679 |
| Purified water Viscosit y | CP | 92.70 | 93.10 | 93.52 | 92.98 | 91.25 | 91.79 |
| | % (torque) | 89.40 | 89.90 | 88.70 | 89.20 | 88.60 | 89.40 |
| Generation of off-taste/off-flavor | | - | X | - | X | - | X |
| Sensory applicability | | - | O | - | O | - | O |

As a result, as shown in Table 8, it was confirmed that when pectin and xanthan gum were contained in a mixing ratio of 3:1, the physical stability of conventional syrup products could be maintained by maintaining the viscosity (CP) of the syrup at 85 to 90 CP.

### Experimental Example 3: Selection of Optimal Natural Antibacterial Agent to Ensure Microbial Safety and Shelf Life

In order to ensure microbial safety and a shelf life of more than 12 months, it was attempted to secure a natural antibacterial agent that can replace synthetic preservatives for the formulation of Example 3, which comprises the composition and content of optimal sugar alcohol, natural high-intensity sweetener, and natural stabilizer secured in Experimental Examples 1 and 2 above.

Specifically, an expiration date test was conducted and a 10-week accelerated test was conducted. An acceleration test was conducted at 5°C, 25°C, 35°C, and 45°C for each temperature, and a regression equation was calculated using the results from sensory testing showing significant differences by date, and the shelf life was calculated as 18 months.

There were a total of 11 natural antibacterial agents used in the experiment, which were commercially used natural antibacterial agents, and the indicator substances of each antibacterial agent, that is, substances showing antibacterial effect, are listed in Table 9.

**[Table 9]**

| **Natural antibacterial agent** | **Raw materials for antibacterial agents (Indicator substances)** |
|---|---|
| Complex Scutellaria Baicalensis Root Extract | Scutellaria Baicalensis Root concentrate, licorice concentrate, jujube concentrate, astragalus concentrate, dextrin, lactic acid |
| TLS | Vitamin B1 lauryl sulfate |
| EluoS | Catechin (tea), citric acid, vitamin B1 lauryl sulfate, calcium, purified water |
| Complex herb extract D | Licorice extract, tea extract, polylysine, crystalline glucose, dextrin |
| Sunsoft 700 series | Medium chain fatty acid monoglycerides |
| Sunphenon 90LB-KR | Green tea extract |
| Flavo C | Citrus extract 55% (vitC, VitP, citric acid, citric pectin, citric sucrose, other organic compounds), glycerin 45% |
| Amino acids | Polylysine, glycerin, alcohol |
| E-polylisine | E-polylisine |
| Fresh D | Glycerin fatty acid ester, processed starch (complex starch D), dextrin |
| Yucca extract powder | yucca extract 50%, maltodextrin |

The experiment was conducted using minimum inhibitory concentration (MIC), which aims to test the minimum inhibitory concentration by type and content of antibacterial agents for target strains in order to confirm the antibacterial activity (growth inhibition) effect equivalent to that of synthetic preservatives (potassium sorbate), and microbial challenge test (MCT) which verifies antibacterial activity and stability by applying the primarily selected antibacterial agents to the product. In all cases, bacteria generated in syrup without preservatives were used, and the analysis conditions are shown in Table 10 below.

**[Table 10]**

| **Analysis conditions** | **General bacteria** | **Fungi** | **Spores** |
|---|---|---|---|
| Bacteria | Bacteria derived from flavor syrup | Asp. niger | B.subtilis |
| Incubator temp./ time | 35 °C | 25 °C | 30 °C |
| Analytical cycle | a week | a week | a week |
| Media | PCA | PDA | NA |
| Start inoculation | 103 cfu/ml | 103 cfu/ml | 103 cfu/ml |

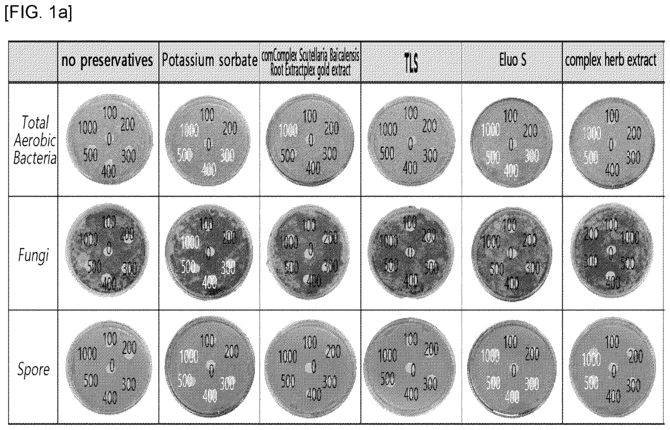

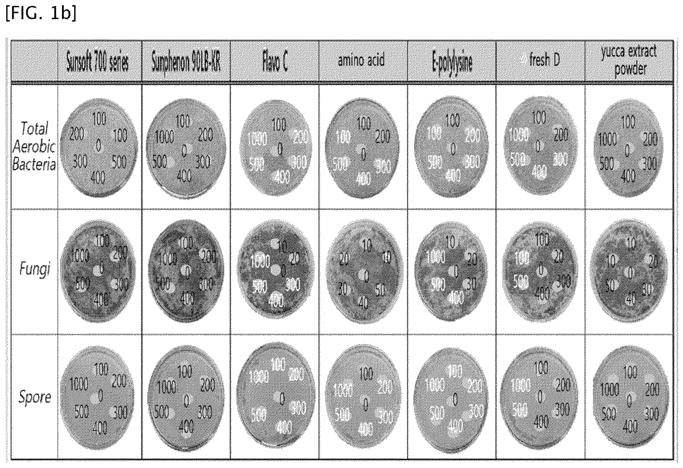

The minimum inhibitory concentration (MIC) was conducted to confirm the antibacterial activity of each antibacterial agent and the minimum concentration showing antibacterial activity against the target strain, and the paper disc diffusion method was used as the experimental method. The process is as follows. 1) preparing target general bacteria, fungi, and spores that have completed proliferation, 2) preparing each natural antibacterial agent by dilution according to each concentration (0, 100ppm, 200ppm, 300pm, 400ppm, 500ppm, and 1000ppm), 3) diluting 1) in sterilized distilled water, which was dispensed into each medium, and cultured, and 4) placing the paper soaked with 2) in the cultured medium to verify the proliferation of bacteria. It was confirmed that if the bacteria had antibacterial activity, the proliferation of bacteria was inhibited as a clear zone was created around the paper. The results are shown in FIG. 1 and Tables 11 to 13.

**[Table 11]**

| **General bacteria (T.A.B)** | **Concentration** | | | | | | |
|---|---|---|---|---|---|---|---|
| | **0ppm** | **100pp m** | **200pp m** | **300pp m** | **400pp m** | **500pp m** | **1,000ppm** |
| Negative Con. (No preservatives) | - | - | - | - | - | - | - |
| Positive Con. (Potassium sorbate) | - | - | - | O | O | O | O |
| Complex Scutellaria Baicalensis Root Extract | - | - | - | - | - | - | O |
| TLS | - | - | - | - | - | - | - |
| EluoS | - | - | - | O | O | O | O |
| Complex herb extract D | - | - | - | - | - | O | O |
| Sunsoft 700 series | - | - | - | - | - | - | - |
| Sunphenon 90LB-KR | - | - | - | - | - | - | - |
| Flavo C | - | O | O | O | O | O | O |
| Amino acids | - | - | - | O | O | O | O |
| E-polylysine | - | - | O | O | O | O | O |
| Fresh D | - | - | - | - | O | O | O |
| Yucca extract powder | - | - | - | - | - | - | - |

**[Table 12]**

| **Fungi** | **Concentration** | | | | | | |
|---|---|---|---|---|---|---|---|
| | **0ppm** | **100pp m** | **200pp m** | **300pp m** | **400ppm** | **500pp m** | **1,000ppm** |
| Negative Con. (No preservatives) | - | - | - | - | - | - | - |
| Positive Con. (Potassium sorbate) | - | - | - | O | O | O | O |
| Complex Scutellaria Baicalensis Root Extract | - | - | - | - | - | - | - |
| TLS | - | - | - | - | - | - | - |
| EluoS | - | - | - | - | - | - | O |
| Complex herb extract D | - | - | - | - | - | - | - |
| Sunsoft 700 series | - | - | - | - | - | - | - |
| Sunphenon 90LB-KR | - | - | - | - | - | - | - |
| Flavo C | - | O | O | O | O | O | O |
| Amino acids | - | - | - | - | - | - | - |
| E-polylysine | - | - | - | - | O | O | O |
| Fresh D | - | - | - | - | - | O | O |
| Yucca extract powder | - | - | - | - | - | - | - |

**[Table 13]**

| **Spores** | **Concentration** | | | | | | |
|---|---|---|---|---|---|---|---|
| | **0ppm** | **100pp m** | **200pp m** | **300pp m** | **400pp m** | **500pp m** | **1,000ppm** |
| Negative Con. (No preservatives) | - | - | - | - | - | - | - |
| Positive Con. (Potassium sorbate) | - | - | - | O | O | O | O |
| Complex Scutellaria Baicalensis Root Extract | - | - | - | - | - | - | - |
| TLS | - | - | - | - | - | - | - |
| EluoS | - | - | - | - | - | - | O |
| Complex herb extract D | - | - | - | - | - | - | - |
| Sunsoft 700 series | - | - | - | - | - | - | - |
| Sunphenon 90LB-KR | - | - | - | - | - | - | - |
| Flavo C | - | O | O | O | O | O | O |
| Amino acids | - | - | - | - | - | - | - |
| E-polylysine | - | - | - | - | O | O | O |
| Fresh D | - | - | - | - | - | O | O |
| Yucca extract powder | - | - | - | - | - | - | - |

As a result, it was confirmed that there were a total of six natural antibacterial agents shown below that exhibited antibacterial activity at the same level as synthetic preservatives (potassium sorbate). Subsequently, the above six types were diluted 10 times in purified water to conduct an off-taste/off-flavor test, and the concentration, at which the off-taste/off-flavor was generated, was selected as the maximum concentration applicable to the next experiment, MCT.

In the case of EluoS, the antibacterial activity was exhibited at a concentration of 300 ppm to 1,000 ppm, but the concentration at which the off-taste/off-flavor was generated was at 800 ppm, thus, the concentration of 300 to 800 ppm was selected as the concentration to be applied to MCT.

In the case of complex herb extract D, the antibacterial activity was exhibited at a concentration of 500 ppm to 1,000 ppm, but the concentration at which the off-taste/off-flavor was generated was 500 ppm, thus, 500 ppm was selected as the concentration to be applied to MCT.

In the case of Flavo C, the antibacterial activity was exhibited at a concentration of 100 ppm to 1,000 ppm, but the concentration at which the off-taste/off-flavor was generated was at 400 ppm, thus, the concentration of 100 to 400 ppm was selected as the concentration to be applied to MCT.

In the case of amino acids, the antibacterial activity was exhibited at a concentration of 300 ppm to 1,000 ppm, but the concentration at which the off-taste/off-flavor was generated was at 400 ppm, thus, the concentration of 300 to 400 ppm was selected as the concentration to be applied to MCT.

In the case of E-polylysine, the antibacterial activity was exhibited at a concentration of 200 ppm to 1,000 ppm, but the concentration at which the off-taste/off-flavor was generated was at 300 ppm, thus, the concentration of 200 to 300 ppm was selected as the concentration to be applied to MCT.

In the case of Fresh D, the antibacterial activity was exhibited at a concentration of 400 ppm to 1,000 ppm, but the concentration at which the off-taste/off-flavor was generated was at 400 ppm, thus, 400 ppm was selected as the concentration to be applied to MCT.

Subsequently, the microbial challenge test (MCT) was conducted in the following order. The experiment was applied to the vanilla syrup, which is the representative among the sucrose syrup, the vanilla syrup, and the red grapefruit syrup, and the applied strains and analysis conditions are shown in Table 14.

**[Table 14]**

| **Analysis conditions** | **General bacteria** | **Fungi** | **Spores** |
|---|---|---|---|
| Bacteria | Bacteria derived from flavor syrup | Asp. niger | B.subtilis |
| Incubator temp./ time | 35 °C | 25 °C | 30 °C |
| Analytical cycle | a week | a week | a week |
| Media | PCA | PDA | NA |
| Start inoculation | 103 cfu/ml | 103 cfu/ml | 103 cfu/ml |

The microbial challenge test (MCT) experiment conditions are as follows: 1) prepare a sucrose-zero vanilla syrup; 2) prepare general bacteria/fungi/spores that have completed proliferation; 3) inject 10³ cfu/ml of bacteria into a sterilized glass container (100 ml); 4) fill 3) with sucrose-zero vanilla syrup at the filling temperature (80°C or higher); 5) let it stand after cooling; 6) one day after the cooling of the stationary sample was completed, culture was performed on a weekly basis; and 7) verify the trend of bacterial proliferation or decline for each natural antibacterial agent for 4 weeks.

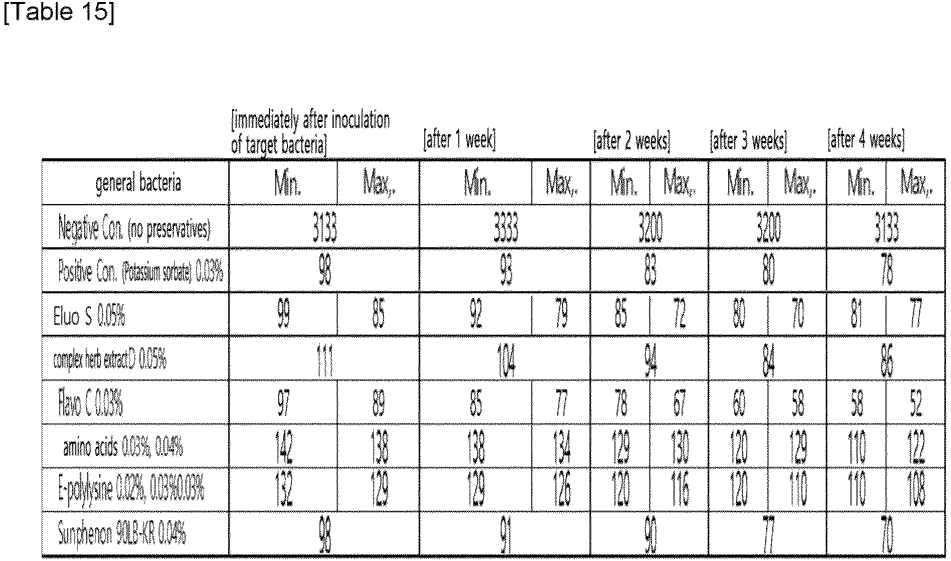

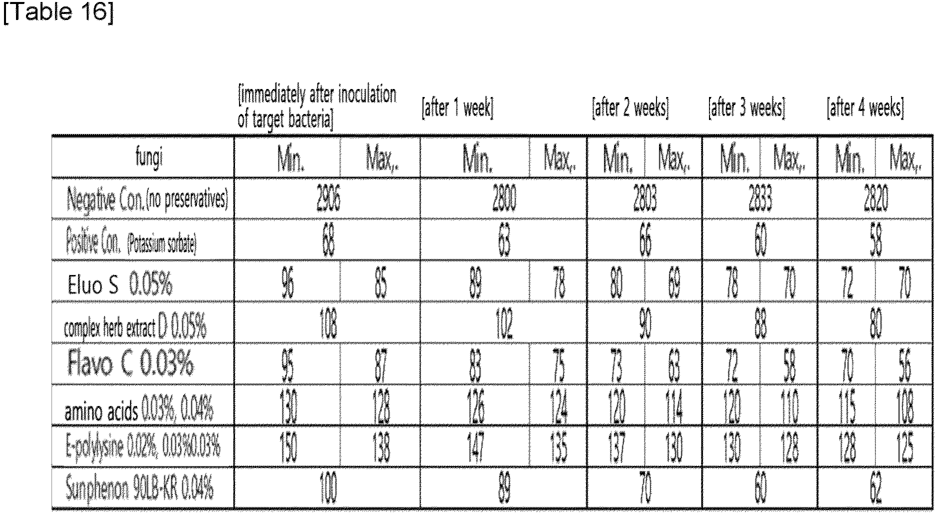

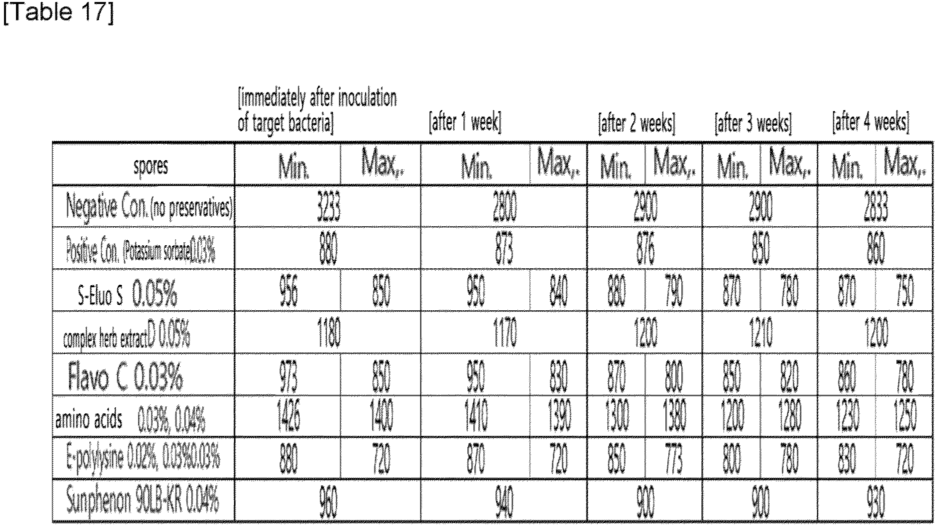

As a result, as shown in Tables 15 to 17, 6 types of initially selected natural antibacterial agents were applied to the sucrose-zero vanilla syrup, and three types of natural additives, which reduced more than 1 log of bacteria compared to no preservatives and had antibacterial activity at the same level as synthetic preservatives, were selected. As a result, EluoS, Flavo C, and Sunphenon 90LB-KR were selected. Among these, it was confirmed that Flavo C (citrus extract) was the natural antibacterial agent with the least off-taste/off-flavor and the best antibacterial activity.

### Experimental Example 4: Selection of Optimal Pasteurization Process

The existing preparation method of flavor syrups has the disadvantages in that it is difficult to control initial microorganisms that may result from the raw materials, and that the intensity of the taste and flavors becomes weaker than that before pasteurization as the natural flavors are volatilized by heat. Therefore, step-by-step sterilization was carried out to control initial microorganisms and prevent volatilization of natural flavors.

In the case of Comparative Examples, sucrose syrup, vanilla syrup, and red grapefruit syrup were each prepared with the same composition as the Comparative Examples in Tables 1 to 3 and used in the experiment.

Specifically, first, sucrose was measured and dissolved in hot water at 60°C, and then other additives (coloring, citric acid, flavor, *etc.)* other than sucrose were added and mixed. Afterwards, standard tests (Brix, pH, *etc.)* were performed, and the syrups were filtered using a 75 um SUS filter, and subjected to high-temperature short-time (HTST) pasteurization (96 to 99°C, 30-40 seconds). Subsequently, the syrup was subjected to secondary filtration using a 5-um cartridge filter and then filled into a glass bottle at a temperature of 80°C or higher, and then it was capped with a cap, inverted, and cooled.

In the case of Examples, sucrose syrup, vanilla syrup, and red grapefruit syrup were each prepared with the same composition as the Examples in Tables 1 to 3 and used in the experiment.

Specifically, first, sugar alcohol was measured and dissolved in hot water at 60°C, and then additives such as coloring, citric acid, *etc.,* excluding flavors, were added and mixed. Subsequently, pre-pasteurization of the raw materials was carried out at 70 to 80°C for 10-15 minutes. Afterwards, the syrup was cooled to 50°C, and the flavors were added thereto. Then, the standard tests (Brix, pH, *etc.)* were performed and the syrup was filtered using a 75-um SUS filter. Subsequently, the syrup was subjected to high-temperature short-time (HTST) pasteurization (96 to 99°C, 30-40 seconds) and secondary filtration using a 5-um cartridge filter and then filled into a glass bottle at a temperature of 80°C or higher. Thereafter, it was capped with a cap, inverted, and cooled.

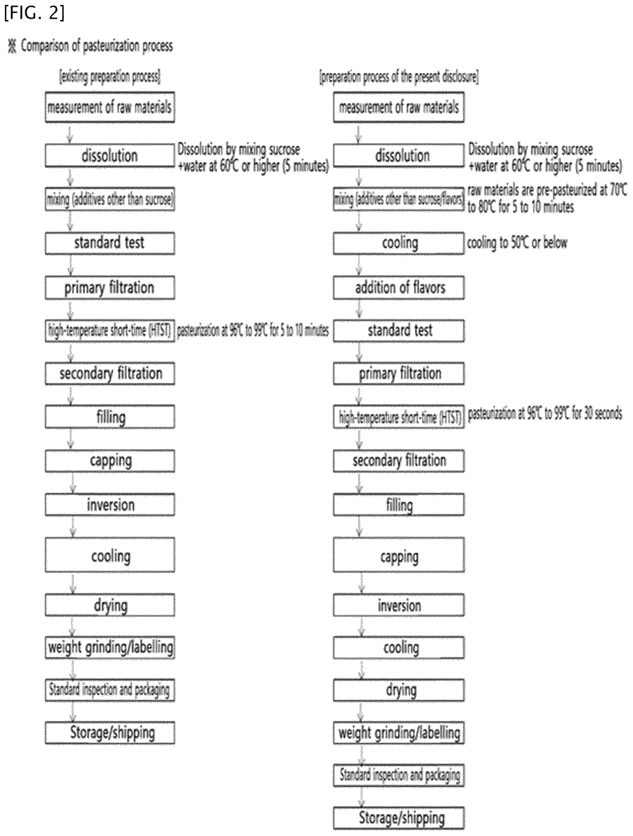

The schematic diagram of the preparation method of Comparative Examples and Examples is shown in FIG. 2.

Subsequently, microbial safety evaluation was conducted.

Specifically, all microbial safety evaluations were performed using a medium by the POURING method (pour plate method). PCA medium was used for general bacteria, PDA medium was used for fungi, and NA medium was used for coliform bacteria.

The medium sterilized (AUTOCLAVE) at 121°C for 15 minutes was stored in a constant temperature water bath at 45 to 50°C to prevent hardening, and 1 ml of the syrup sample to be tested for microorganisms was taken and applied to an empty Petri dish. The medium in the constant temperature water bath was poured onto the Petri dish and mixed slowly so that the sample and medium were well mixed.

Afterwards, general bacteria were stored in an incubator at 35°C for 1 day, fungi were stored in an incubator at 25°C for 5 days, and coliform bacteria were stored in an incubator at 30°C for 2 days to confirm whether bacteria were produced.

**[Table 18]**

| Microbial Safety Evaluation | | | |
|---|---|---|---|
| **Items** | **Specification** | **Sample** | **Results** |
| General bacteria | 100 or below | Comparative Example | 500(not appropriate) |
| (cfu/g) | | Example | 25 |
| Coliform bacteria | n=5, c=1, m=0, M=10 | Comparative Example | N.A. |
| (cfu/g) | | Example | N.A. |
| Fungi | Not detected | Comparative Example | 80(not appropriate) |
| (cfu/g) | | Example | N.A. |

Table 18 shows the results of experiments using the sucrose syrups of Examples and Comparative Examples, and the results were the same even when the vanilla syrups and red grapefruit syrups were used.

As a result, as shown in Table 18 above, in the case of Comparative Example using the existing process, it was confirmed that initial microorganism control was not achieved as a result of analysis of general bacteria and fungi. In contrast, in the case of Examples, it was confirmed that the risk of occurrence of microorganisms that could be caused by the raw materials was reduced by mixing and dissolving the sugar alcohol and purified water, followed by pre-sterilization at 70 to 80°C for 10 to 15 minutes. In particular, in the case of general bacteria, it was confirmed that there was a difference of more than 1 log, and that the fungi were not detected upon pre-pasteurization.

Subsequently, in order to measure the degree of volatilization of natural flavors according to the preparation method of the present disclosure, the syrup before pasteurization and the syrup after pasteurization in the high-temperature short-time (HTST) pasteurization step of the existing syrup preparation method (Comparative Example) and the method for preparing the sucrose-free natural syrup were each diluted 10 times with purified water and a sensory survey was conducted on 28 professional panels (ages of 30 to 40). In order to determine significant differences compared to before pasteurization, a difference identification test was conducted with the same panels. When the difference identification was conducted on 28 people, if the number of correct answers was 14, it was interpreted that there was a significant difference (95% confidence).

**[Table 19]**

| Sensory Evaluation of Flavor Intensity | | | |
|---|---|---|---|
| | **Before pasteuri zation** | **Compar ative Example** | **Example** |
| Flavor intensity | 4.2 | 3.8 | 4.2 |
| Overall preferen ce | 3.8 | 3.52 | 3.85 |

**[Table 20]**

| **Three-point test (n=28)** | **Comparative Example** | **Example** |
|---|---|---|
| Number of correct | 18 | 3 |
| answers | | |
| Significance | α=0.05 | α=0.05 |

Tables 19 and 20 show the results of experiments using the sucrose syrups of Examples and Comparative Examples, and the results were the same even when the vanilla syrups and red grapefruit syrups were used.

As a result, as shown in Tables 19 and 20 above, in the case of the existing method (Comparative Example), sucrose was dissolved and natural flavors were added to the mixture maintained at 60°C or higher, which resulted in strong volatilization of natural flavors, thus, the flavor intensity was lower than that before pasteurization, and the overall preference was decreased with a significant difference (p-value<0.05), and when a three-point test was conducted, the number of correct answers was 18, confirming that a significant difference could be recognized.

In contrast, in the case of the Examples of the present disclosure, when the mixed solution was cooled at 50°C or below and the flavors were added, the flavor intensity and overall preference were determined to be at a similar level as before pasteurization, and when the differences were identified, the number of correct answers was 3, confirming that there were no significant differences.

Accordingly, it was confirmed that when the preparation method including the pasteurization process of the present disclosure was carried out compared to the existing pasteurization process (Comparative Example), the initial occurrence of microorganisms in the sucrose-free natural syrup was reduced and the volatilization of natural flavors was lowered.

From the foregoing, a skilled person in the art to which the present disclosure pertains will be able to understand that the present disclosure may be embodied in other specific forms without modifying the technical concepts or essential characteristics of the present disclosure. In this regard, the exemplary embodiments disclosed herein are only for illustrative purposes and should not be construed as limiting the scope of the present disclosure. On the contrary, the present disclosure is intended to cover not only the exemplary embodiments but also various alternatives, modifications, equivalents, and other embodiments that may be included within the spirit and scope of the present disclosure as defined by the appended claims.

## Claims

1. A sucrose-free natural syrup, comprising sugar alcohols, natural high-intensity sweeteners, natural stabilizers, natural antibacterial agents and natural flavors,
wherein the sugar alcohols are contained in an amount of 10 to 30 parts by weight based on 100 parts by weight of the total syrup,
the natural high-intensity sweeteners are contained in an amount of 0.35 to 0.55 parts by weight based on 100 parts by weight of the total syrup,
the sugar alcohols and natural high-intensity sweeteners are contained in a mixing ratio of 10:1 to 100:1,
the natural stabilizers comprise pectin and xanthan gum,
the natural stabilizers are contained in an amount of 0.3 to 0.5 parts by weight based on 100 parts by weight of the total syrup,
the pectin and xanthan gum are contained in a mixing ratio of 4:1 to 2:1, and
the natural antibacterial agent is one or more selected from the group consisting of citrus extract, EluoS complex extract, and green tea extract.

2. The syrup of claim 1, wherein the sugar alcohol is one or more selected from the group consisting of erythritol, tagatose, xylose, arabinose, ribose, xylitol, lactitol, maltitol, and sorbitol.

3. The syrup of claim 1, wherein the natural high-intensity sweetener is one or more selected from the group consisting of steviol glycosides, sucralose, aspartame, monk fruit extracts, licorice extracts, and thaumatin.

4. The syrup of claim 1, wherein the syrup has a viscosity (CP) of 85 to 90 CP.

5. A food composition comprising the syrup of any one of claims 1 to 4.

6. A method for preparing a sucrose-free natural syrup, comprising:
preparing a raw material composition by dissolving sugar alcohols, natural high-intensity sweeteners, natural stabilizers, and natural antibacterial agents in water, followed by stirring;
pre-pasteurizing the raw material composition at a temperature range of 70°C to 80°C for 10 to 15 minutes;
cooling the pre-pasteurized raw material composition to a temperature of 25°C to 50°C;
preparing a syrup composition by mixing natural flavors to the cooled syrup composition; and
pasteurizing the syrup composition using high-temperature short-time (HTST) pasteurization at a temperature range of 96°C to 99°C for 30 to 40 seconds.

7. The method of claim 6, wherein
the sugar alcohols are contained in an amount of 10 to 30 parts by weight based on 100 parts by weight of the total syrup,
the natural high-intensity sweeteners are contained in an amount of 0.35 to 0.55 parts by weight based on 100 parts by weight of the total syrup,
the sugar alcohols and natural high-intensity sweeteners are contained in a mixing ratio of 10:1 to 100:1,
the natural stabilizers comprise pectin and xanthan gum,
the natural stabilizers are contained in an amount of 0.3 to 0.5 parts by weight based on 100 parts by weight of the total syrup,
the pectin and xanthan gum are contained in a mixing ratio of 4:1 to 2:1, and
the natural antibacterial agent is one or more selected from the group consisting of citrus extract, EluoS complex extract, and green tea extract.

8. A sucrose-free natural syrup prepared by the method of claim 6 or 7.

9. The method of claim 8, wherein the syrup prepared using the method has reduced volatilization of natural flavors.

10. A method for improving the flavor persistence of natural flavors, comprising:
preparing a raw material composition by dissolving sugar alcohols, natural high-intensity sweeteners, natural stabilizers, and natural antibacterial agents in water, followed by stirring;
pre-pasteurizing the raw material composition at a temperature range of 70°C to 80°C for 10 to 15 minutes;
cooling the pre-pasteurized raw material composition to a temperature of 25°C to 50°C;
preparing a syrup composition by mixing natural flavors with the cooled syrup composition; and
pasteurizing the syrup composition using high-temperature short-time (HTST) pasteurization at a temperature range of 96°C to 99°C for 30 to 40 seconds.

11. The method of claim 10, wherein the method reduces the volatilization of natural flavors.
